# EUROPÄISCHE PATENTSCHRIFT

(11) **EP 3 884 142 B1**
(45) Veröffentlichungstag und Bekanntmachung des Hinweises auf die Patenterteilung: **01.03.2023**
(21) Anmeldenummer: 20737398.6
(22) Anmeldetag: 02.07.2020
(51) Int. Cl.: F01M 13/04, B01D 45/12

(54) **SEPARATORTELLER FÜR EINEN ÖLNEBELABSCHEIDER UND ÖLNEBELABSCHEIDER**
SEPARATOR PLATE FOR AN OIL MIST SEPARATOR AND OIL MIST SEPARATOR
PLATEAU DE SÉPARATEUR POUR UN SÉPARATEUR DE BROUILLARD D'HUILE ET SÉPARATEUR DE BROUILLARD D'HUILE

(30) Priorität: 24.07.2019 DE 102019120023
(43) Veröffentlichungstag der Anmeldung: 29.09.2021
(73) Patentinhaber: Hengst SE, 48147 Münster (DE)
(72) Erfinder: DIEKJAKOBS, Mathias, 48565 Steinfurt (DE); POTZ, Matthias, 48159 Münster (DE); DWOROG, Andreas, 48161 Münster (DE)
(74) Vertreter: Lohr, Jöstingmeier & Partner
(86) Internationale Anmeldenummer: PCT/EP2020/068625
(87) Internationale Veröffentlichungsnummer: WO 2021/013490

(56) Entgegenhaltungen:
- EP-A1- 3 034 821
- DE-A1-102017 108 168

## Beschreibung

### Technisches Gebiet

Die Erfindung betrifft einen Separatorteller für einen Ölnebelabscheider insbesondere zur Abscheidung von Öl aus Kurbelgehäusegasen nach dem Oberbegriff des Anspruchs 1, sowie einen Ölnebelabscheider mit wenigstens einem solchen Separatorteller.

### Stand der Technik

Beim Verbrennungsprozess in Kolbenmotoren strömt ein geringer Teil der Abgase an dem oder den Kolben seitlich vorbei und somit vom Verbrennungsraum in das Kurbelwellengehäuse. Diese am Kolben vorbeiströmenden Abgase werden als Blow-by-Gase bezeichnet. Blow-by-Gase müssen aus dem Kurbelwellengehäuse entfernt werden, da sie den Differenzdruck zwischen Brennraum und Kurbelwellengehäuse reduzieren und damit den Wirkungsgrad des Motors. Davon ganz abgesehen, sind Kurbelwellengehäuse in der Regel für diese höheren Drücke nicht ausgelegt.

Entsprechend haben Kurbelwellengehäuse in der Regel einen Auslass für diese Blow-by Gase. Allerdings haben diese Abgase einen nennenswerten Ölnebelanteil, der nicht in die Umgebung abgegeben werden darf. Daher wurde unter anderem in der US 6,755,896 B ein nach dem Zentrifugenprinzip arbeitender Ölnebelabscheider vorgeschlagen. Dieser hat ein Gehäuse mit einem Gaseinlass, einem Gasauslass und einem Ölauslass. Die Blow-by-Gase treffen in dem Gehäuse auf schnell rotierende konische Separatorteller, die axial beabstandet voneinander mit einer Welle rotieren. Öltröpfchen lagern sich an den rotierenden Separatortellern an und werden anschließend an die Gehäusewand geschleudert. An der Gehäusewand entlang fließt das Öl zu einer Auffangrinne, die in dem Ölauslass mündet. Die so gereinigten Blow-by-Gase verlassen das Gehäuse über den Gasauslass. Nach der US 6,755,896 B (hierin durch Referenz aufgenommen) können die Separatorteller aus Kunststoff sein. Für einen ähnlich aufgebauten anderen Ölnebelabscheider wird in der WO 2012/033440 A vorgeschlagen Separatorteller aus Metallblech zu fertigen.

Gegenstand der DE 10 2017 108 168 A (hierin durch Referenz aufgenommen) ist ein Ölnebelabscheider mit einem Rotor aus mehreren gestapelten Abscheidelementen. Die Abscheideelemente haben radial an einen Ring angesetzte Speichen, mit je einer Längsachse. Die Längsachsen der Speichen befinden sich in einer gemeinsamen Ebene. In diesem Sinne ist das Abscheideelement plan. Zwischen den Speichen sind ringsegmentförmige Lamellen, die radial voneinander beabstandet sind.

Auch die EP 3 034 821 A1 beschreibt einen Ölnebelabscheider, der in einem Strömungskanal angeordnet wird. Ölnebel tritt durch Öffnungen in den Ölnebelabscheider ein, dabei wird der Ölnebel beschleunigt. Der beschleunigte Ölnebel trifft in dem Ölnebelabscheider auf eine saugfähige Prallplatte, an der das Öl von dem Gas getrennt wird. Das gereinigte Gas umströmt die Prallplatte und tritt durch eine zentrale Öffnung in der Prallplatte oder seitlich an der Prallplatte aus dem Ölnebelabscheider aus.

### Darstellung der Erfindung

Die Erfindung beruht auf der Beobachtung, dass Ölnebelabscheider zwar auf der einen Seite die Umweltbelastung von Kolbentriebwerken durch Ölnebel reduzie ren, aber gleichzeitig das Gesamtgewicht des Triebwerks erhöhen, was sich in erhöhten Materialkosten niederschlägt und beim Einsatz der Kolbentriebwerke zum Antrieb von Kraftfahrzeugen den Treibstoffverbrauch und somit die CO₂-Bilanz verschlechtert.

Der Erfindung liegt die Aufgabe die Kosten für Kolbentriebwerke zu reduzieren und gleichzeitig die COz-Bilanz der Herstellung und des Betriebs von Kolbentriebwerken zu verbessern.

Diese Aufgabe wird durch eine Vorrichtung nach Anspruch 1 gelöst. Vorteilhafte Ausgestaltungen der Erfindung sind in den Unteransprüchen angegeben.

Der Separatorteller nach der Erfindung dient insbesondere zum Abscheiden von Ölnebel, anderen Flüssigkeiten oder Partikeln von Blow-by-Gasen oder ganz allgemein von Gas-Fluid Gemischen. Der Separatorteller hat eine Aufnahme für eine Antriebswelle, so dass die Antriebswelle und der Separatorteller im montierten Zustand eine gemeinsame Rotationsachse aufweisen. Der Separatorteller ist scheibenförmig und kann daher auch als Separatorscheibe oder Separatorplatte bezeichnet werden, wobei die Separatorscheibe oder -platte vorzugsweise nicht plan ist, sondern wenigstens eine konische Oberfläche aufweist, so dass der Begriff Separatorteller in Anlehnung an die Form eines einfachen Suppentellers anschaulicher ist.

Die Separatorscheibe hat einen ersten Ringbereich, der sich radial an die Aufnahme anschließt. Der innere Rand, d.h. der in Richtung der Rotationsachse weisende Rand des ersten Ringbereichs ist vorzugsweise als Drehkupplung ausgebildet. Beispielsweise kann die Kontur des Randes diskontinuierlich rotationssymmetrisch sein, so dass ein drehbewegungsübertragender Formschluss mit einer Antriebswelle ermöglicht wird. Dadurch wird die Montage des Separatortellers auf einer Antriebswelle eines Ölnebelabscheiders vereinfacht.

Diskontinuierlich rotationssymmetrisch bezeichnet hier eine gebrochene Rotationssymmetrie, wobei eine Drehung der Kontur um einen festen Winkel α=360°/n (n>1) die Kontur auf sich selber abbildet.

An den ersten Ringbereich schließt sich in radialer Richtung ein zweiter Ringbereich an. Und an diesen zweiten Ringbereich schließt sich ein dritter Ringbereich ebenfalls in radialer Richtung an. Die radiale Richtung bezeichnet hier wie üblich die von der Rotationsachse wegweisende Richtung.

Der dritte Ringbereich erstreckt sich vorzugsweise zumindest in einem Abschnitt konisch. "Konisch" meint vorzugsweise aber nicht notwendigerweise der Fläche eines Kegelkonus, also eines Kegelstumpfs, entsprechend. Der Begriff "konische Fläche" ist hier geometrisch zu verstehen, d.h. eine Konusfläche wird durch Rotation einer Kurve um eine Gerade, hier um die Rotationsache gebildet. Die Kurve kann auch ein Geradenabschnitt sein, dann ergibt sich die schon genannte Kegelkonusfläche die auch als Kegelstumpffläche bezeichnet wird (vgl. Bronstein Semendjajev, Handbuch der Mathematik, Kap. 3.1.2.4, Verlag Harry Deutsch Frankfurt/Main, 1993).

Der zweite Ringbereich hat vorzugsweise mehrere Speichen, die den ersten und den dritten Ringbereich miteinander verbinden. Zwischen je zwei benachbarten Speichen ist vorzugsweise je ein Freiraum, der im Betrieb als sich in axialer Richtung erstreckender Strömungskanal für das zu trennende Gasgemisch dient. Der Separatorteller lässt sich durch eine günstige Wahl der Angussstellen im Vergleich mit dem Stand der Technik als Spritzgussteil mit einer besonders dünnen Wandstärke des dritten Abschnitts fertigen, was dazu führt, dass weniger Material benötigt wird und der Fertigungsprozess beschleunigt wird. Zudem beschleunigt der Separatorteller schneller, so dass auch in der Anlassphase des Kolbenmotors der Ölnebel sicher abgeschieden wird. Die Umweltbelastung wird entsprechend verringert. Ein weiterer Effekt ist der Beitrag zur Gewichtsreduzierung moderner Kolbenmotoren, was zu CO₂-Einsparung beim Einsatz als Kraftfahrzeugantrieb führt.

Vorzugsweise ist der Separatorteller ein Spritzgussteil, d.h. er wird im Spritzgussverfahren, vorzugsweise aus einem Kunststoff hergestellt. Der Separatorteller hat vorzugsweises wenigstens zwei Angussstellen, die beispielsweise symmetrisch um die Rotationsachse angeordnet sein können. Eine möglichst geringe Anzahl von Angussstellen reduziert die Fertigungskosten. Die symmetrische Anordnung ermöglicht eine Verringerung der Materialstärke, d.h. der Wanddicke insbesondere des dritten Ringabschnitts. Die symmetrische Anordnung wirkt einer Ausbildung von Bindenähten entgegen, die durch das Aufeinandertreffen von Fließfronten im Spritzgussprozess entstehen. Eine einzige Angussstelle kann jedoch genügen.

Vorzugsweise ist die wenigstens eine Angussstelle im ersten oder im zweiten Ringbereich, beispielsweise kann wenigstens eine Angussstelle im Bereich einer Speiche angeordnet sein.

Als Angussstelle bezeichnet man beim Spritzgießen die Öffnungen der Spritzgussform, über die eine später erstarrende Kunststoffmasse, in der Regel eine Kunststoffschmelze, in die Spritzgussform eingepresst wird. Diese Angussstellen sind nach dem Entformen deutlich zu erkennen, zumindest wenn keine Politur oder andere flächige Materialabtragung nach dem Entformen erfolgt. Nachfolgend wird der Begriff Kunststoffschmelze als häufigste Anwendungsform verwendet, es wäre aber auch eine später durch chemische Prozesse aushärtende Kunststoffmasse verwendbar. In diesem Sinne wird in dieser Anmeldung "Kunststoffschmelze" als bevorzugte Ausführungsform genannt und als pars-pro toto für eine fließfähige später erstarrende (z.B. aushärtende) Kunststoffmasse verstanden.

Bei der Fertigung von Separatortellern aus Kunststoff die für die Reinigung von Blow-by Gasen bestimmt sind, müssen Kunststoffe gewählt werden, die auch bei Temperaturen um 120°C eine ausreichende mechanische Festigkeit und chemische Resistenz aufweisen. Daher sind insbesondere Thermoplaste mit einem vglw. hohen Polymerisationsgrad geeignet, wie z.B. Polyamide (PA66, PA6.10,...), und insbesondere teilaromatisierte Polyamide, d.h. Polyamide mit einem aromatischen System in Nachbarstellung zur Polyamidbindung, wie Polyphtalamid (PPA) und Polyamide mit aliphatischen Kohlenwasserstoffketten (PA4T, PA6T, PA9T, PA10T,...), sowie Copolymere mit solchen Kunststoffen (PA6T/6I, PA6T/66, PA6T/DT, PA6T/6I/66, PA66+PA6I/6T, PA6/PA6T,...). Diese haben jedoch im Vergleich zu anderen Kunststoffen eher schlechte Fließeigenschaften, da aufgrund der komplexen chemischen Struktur die Schmelzviskosität hoch ist. Dies führt dann oft zu Bindenähten, die mechanische Stabilität verschlechtern und eine Erhöhung der Wandstärken erfordern.

Nur zur Vermeidung von Missverständnissen sei klargestellt, dass der Polymerisationsgrad entsprechend der üblichen Definition auch hier die Anzahl der Grundbausteine pro Polymermolekül angibt. In der Praxis ist dann natürlich für die oben genannten Thermoplaste der mittlere Polymerisationsgrad relevant. Dieser sollte für die oben genannten Polyamide vorzugsweise größer gleich 100 sein, besonders bevorzugt größer gleich 120 oder insbesondere bevorzugt größer gleich 150 sein. Da mit zunehmendem Polymerisationsgrad das Fließverhalten im Spritzgussverfahren schlechter wird, sollten überhöhte Polymerisationsgrade, beispielsweise Polymerisationsgrade größer als 200 oder zumindest größer als 250, vermieden werden, wenn Polyamide eingesetzt werden.

Wenn die Speichen, die den jeweiligen Angussstellen benachbart sind und/oder eine Angussstelle aufweisen, radial der Angussstelle zumindest einen Abschnitt mit einer verjüngten Querschnittsfläche aufweisen (z.B. im Vergleich zu den anderen Speichen insgesamt einen verjüngten Querschnitt aufweisen), dann wirken die komplementären Vorsprünge der Spritzgussform als Drossel für den von der Spritzgussform gebildeten Strömungskanal, der im entformten Zustand als Speiche sichtbar wird. Diese Drossel ermöglicht es den Strömungswiderstand zu simulieren, den die Kunststoffschmelze beim Spritzgießen überwinden muss, um über eine weiter von der Angussstelle entfernte Speiche (also eine nachfolgend sogenannte *angussferne Speiche*), in den dritten Bereich zu fließen. Daher verteilt sich die Kunststoffschmelze beim Spritzgießen über den ersten Ringbereich (genauer über den den Ringbereich definierenden Hohlraum der Spritzgussform) gleichmäßiger auf alle Speichen, also auch auf weiter von der Angussstelle entfernte Speichen. Entsprechend ist der Druck der Kunststoffschmelze am Ende der Strömungskanäle, die später als angussnahe Speichen sichtbar werden, zumindest in etwa an den Druck am radialen Ende der Strömungskanäle angepasst, die angussferne Speichen definieren. Da die Speichen (genauer die komplementären Kanäle der Spritzgussform) den Zufluss zu dem dritten Ringabschnitt bilden, bildet sich die Fließfront daher zumindest weitgehend gleichmäßig in radialer Richtung nach Außen aus. Die Stabilität des Separatortellers wird daher durch Bindenähte nicht oder nur minimal reduziert. Die Wandstärke kann entsprechend weiter reduziert werden.

Zur sprachlichen Vereinfachung wird hierin nicht mehr zwischen einem Hohlraum der Spritzgussform und dem später darin ausgebildeten Element unterschieden. Wenn formuliert wird, dass eine Kunststoffschmelze durch eine Speiche fließt, ist damit gemeint, dass die Kunststoffschmelze durch einen Hohlraum einer Spritzgussform fließt, wobei der Hohlraum unmittelbar vor dem Entformen des Separatortellers die genannte Speiche umschließt. Entsprechendes gilt für andere Teile oder Abschnitte des Separatortellers. Hohlräume einer Spritzgußform werden vereinfachend durch die von ihnen geformten Teile, Komponenten oder Abschnitte bezeichnet.

Angussnah ist eine Speiche, wenn sie entweder einen Anguss hat oder näher an einem Anguss angeordnet ist, als eine angussferne Speiche.

Nur um Fehlinterpretationen vorzubeugen ist anzumerken, dass die Querschnittsfläche sich quer zur Längsrichtung der jeweiligen Speiche erstreckt und dass die Angussstelle(n) radial innenliegend des verjüngten Abschnitts der angussnahen Speiche(n) angeordnet ist(sind).

Bisher wurde der Einfachheit halber davon ausgegangen, dass alle Speichen die gleiche Länge haben, das ist aber nicht notwendigerweise der Fall. Der Strömungswiderstand der Speichen (also der entsprechenden Spritzgusskanäle) lässt sich nicht nur über den Querschnitt, sondern alternativ oder zusätzlich über deren Länge einstellen, beispielsweise können angussferne Speichen kürzer als angussnahe Speichen sein, um die Druckverhältnisse am Ende der Speichen einander anzupassen. Beispielsweise können angussnahe Speichen radial verlaufen und die angussfernen gekrümmt oder schräg zur Radialen verlaufen.

Wenn sich an wenigstens eine Speiche in radialer Richtung ein Steg anschließt, der als Verdickung der Wandstärke des konischen Abschnitts ausgebildet ist, dann hat die entsprechende Spritzgussform eine Ausnehmung, die den Strömungswiderstand in radialer Richtung reduziert. Im späteren Betrieb erhöhen die Stege die Reibung zwischen dem rotierenden Separatorteller und dem zu trennenden Gas-Flüssigkeitsgemisch, z.B., einem Blow-by-Gas, das im Rahmen dieser Anmeldung lediglich als Beispiel für alle Gas-Flüssigkeitsgemische steht. Das Gasgemisch wird besser in Rotation versetzt, so dass weniger Separatorteller notwendig sind, was wiederum zur Herstellungskosten- und Gewichtsersparnis beiträgt. Besonders gut gelingt das, wenn die Stege als Abstandshalter zwischen benachbarten Separatortellern dienen, d.h. im Ölnebelabscheider liegt die Unterseite eines oberen Separatortellers auf wenigstens zwei (vorzugsweise drei oder mehr) Stegen auf, wobei die Stege auf der Oberseite eines unteren Separatortellers ausgebildet sind. Alternativ oder zusätzlich könnten die Stege natürlich auch auf der Unterseite des oberen Separatortellers ausgebildet sein. Problematisch können die Stege aber mit Blick auf die Ausbildung von Bindenähten sein, weil in den Stegen die Kunststoffschmelze der übrigen Fließfront vorauseilt.

Es hat sich als besonders vorteilhaft erwiesen, wenn daher die Höhe h der Stege mit der die Stege über die Wandung zwischen zwei Stegen hinausstehen möglichst niedrig gewählt wird. Beispielsweise kann die die Höhe der Stege h zumindest in etwa der Höhe der sonst herrschenden Wandstärke d entsprechen, d.h. *h* ≈ *d,* z.B. *h* = *d* ± 20%, vorzugsweise d = *h* ± 10%, besonders bevorzugt *h* = *d* ± 5%. Folglich entspricht die Dicke des Separatortellers im Steg vorzugsweise zumindest in etwa dem Doppelten der Dicke d der zwischen den Stegen liegenden Wandstärke. Die Höhe h der Stege ist daher die zusätzliche Wandstärke mit der die jeweiligen Stege über den zwischen den Stegen liegenden Bereich des Separatortellers hervorstehen. Durch die vorgenannten Beziehungen zwischen der Steghöhe h und der Dicke d der zwischen den Stegen liegenden Wand wird das Vorauseilen der Fließfront wirkungsvoll eingedämmt. Die bevorzugte Steghöhe h ist kleiner oder gleich 0,3mm (h≤0,3mm), besonders bevorzugt kleiner oder gleich 0,25mm (h≤0,25mm) oder kleiner gleich 0,2mm (h≤0,2mm). Die sinnvolle Untergrenze ist u.a. von der Viskosität der abzutrennenden Flüssigkeit abhängig. Für aktuelle Motoröle scheint eine Untergrenze von 0,1mm eventuell auch 0,05mm gegeben. Sofern eine nennenswerte Anzahl von Partikeln in dem zu trennenden Gemisch zu erwarten sind, kann der erwartete maximale Partikeldurchmesser eine sinnvolle Untergrenze sein. Dadurch wird ermöglicht, dass die Partikel den Spalt zumindest im Wesentlichen ungehindert passieren.

Da die Steghöhe bei der Verwendung der Stege als Abstandshalter zwischen den Tellern die Höhe des sich ergebenden Spalts bestimmt, führen geringere Steghöhen zu einer Höhenreduzierung des gesamten Tellerstapels und somit zu einer Bauraumreduzierung. Es hat sich darüber hinaus herausgestellt, dass eine geringe Spalthöhe besonders vorteilhaft auf eine Abscheidung feinster Öltröpfchen auswirkt, d.h. die Abscheidung feinster Öltröpfchen gegenüber einem größeren Spalt begünstigt.

Zusätzlich oder alternativ zu den Stegen können auch weitere Abstandshalter an den Separatortellern vorgesehen sein.

Besonders bevorzugt schließt sich an wenigstens zwei benachbarte Speichen je ein Steg in radialer Richtung zumindest mittelbar an, wobei zwischen den beiden Stegen wenigstens ein sich radial erstreckender Zwischensteg ist. Der Zwischensteg ermöglicht auch den Bereich zwischen den Stegen besonders gleichmäßig beim Spritzgießen zu füllen. Die kritischen Bindenähte werden weiter reduziert und entsprechend kann die Wandstärke geringer ausfallen. Besonders bevorzugt münden die Speichen, oder wenigstens einige Speichen in einen Ring oder ein oder mehrere Ringsegmente, die gegenüber dem radial außenliegenden Bereich des dritten Abschnitts eine erhöhte Wanddicke aufweisen. Der entsprechende ringförmige Hohlraum der Spritzgussform ermöglicht auf diese Weise ein besonders gleichmäßiges Befüllen des radial außenliegenden Ringspalts der Spritzgussform. Insbesondere kann der Ring bzw. das wenigstens eine Ringsegment mit einem oder mehreren Zwischenstegen verbunden sein. Der entsprechende ringförmige Hohlraum der Spritzgussform speist dann die Ausnehmung für die Zwischenstege, d.h. der viskositätsbedingte Druckabfall des fließenden Kunststoffs auf dem Weg zu dem entsprechenden "Zwischensteg" (gemeint ist die den Zwischensteg umschließende Ausnehmung) wird reduziert und die Ausnehmungen werden gleichmäßig mit Kunststoff gefüllt. All dies dient wiederrum der Vermeidung von Bindenähten, welches eine weitere Reduktion der Wandstärke und somit eine Kosten- und Gewichtsersparnis ermöglicht.

Aus dem gleichen Grund verjüngen sich vorzugsweise die Querschnittsflächen des wenigstens einen Stegs und/oder des wenigstens einen Zwischenstegs in radialer Richtung.

Die Querschnittsfläche A_{z}(r) des wenigstens einen Zwischenstegs als Funktion des Radius ist vorzugsweise größer als wenigstens eine der jeweiligen Querschnittsflächen As(r) der beiden den Zwischensteg einschließenden Stege bei dem gegebenen Radius, d.h. A_{z}(r)> As(r), bevorzugt A_{z}(r)≥ 1,2·A_{S}(r), besonders bevorzugt A_{z}(r)≥ 1,5·A_{S}(r) oder A_{z}(r)≥ 2·A_{S}(r). Dadurch sinkt der Strömungswiderstand durch die dem Zwischensteg entsprechende weiter von den Speichen entfernte Ausnehmung, was insgesamt zu einer gleichmäßigeren Fließfront führt. Die Qualität des Separatortellers wird weiter erhöht, d.h. Bindenähte werden weiter reduziert. Der Radius bezeichnet wie üblich den Abstand von der Rotationsachse.

Besonders bevorzugt hat wenigstens ein Steg eine Querschnittsfläche, die sich in radialer Richtung zunächst verkleinert und dann wieder vergrößert. Der komplementäre Vorsprung der Spritzgussform reduziert den Kunststofffluss in die den späteren Steg bildende Ausnehmung, d.h. er wirkt als Drossel und erhöht den Anteil des in Umfangsrichtung, z.B. in Richtung einer Zwischenstegausnehmung fließenden Kunststoffs, der Bindenähte werden weiter reduziert. Wenn zwischen zwei benachbarten Stegen mehrere Zwischenstege angeordnet sind, können die stegnahen Zwischenstege ebenso eine sich in radialer Richtung zunächst verkleinernde und dann wieder vergrößernde Querschnittsfläche aufweisen.

Der dritte Abschnitt besteht vorzugsweise zumindest im Wesentlichen aus einem konischen Ringsegment, mit einer mit Ausnahme der optionalen Stege und optionalen Zwischenstege sowie des oben beschriebenen optionalen Rings zur Verteilung des Kunststoffs in Umfangsrichtung, zumindest weitgehend konstanten Wandstärke. Besonders bevorzugt ist die Wandstärke des dritten Ringabschnittszwischen zwei benachbarten Stegen und/oder zwischen einem Steg und einem benachbarten Zwischensteg in Umfangsrichtung und/oder in radialer Richtung bis auf 10% konstant. Die bevorzugte mittlere Wandstärke dₘ ist kleiner odergleich 0,3mm (dₘ≤0,3mm), besonders bevorzugt kleiner oder gleich 0,25mm (dₘ≤0,25mm) oder kleiner gleich 0,2mm (dₘ≤0,2mm).

Zur weiteren Verbesserung der Abscheideleistung kann auf der Oberfläche eine Oberflächentexturierung, z.B. in Form von Mikrovertiefungen oder -erhebungen vorgesehen sein. Eine solche Texturierung kann besonders gut bei den bevorzugten geringen Wandstärken erreicht werden, da bei diesen eine vorteilhafte schnelle Abkühlung der Randschicht erreicht wird.

Der beschriebene Separatorteller findet bevorzugt in einem Ölnebelabscheider, z.B. für Blow-by-Gase von Kolbenmotoren Anwendung, aber das beschriebene Prinzip ist nicht auf diese Anwendung der Erfindung beschränkt. Auch in anderen technischen Bereichen, in denen eine Trennung von Gas-Flüssigphasen erfolgt, kann der beschriebene Separatorteller genutzt werden. Typischerweise hat der entsprechende Separator ein Gehäuse, das wenigstens einen Gaseinlass, wenigstens einen Gasauslass und wenigstens einen Ölauslass hat. In dem Gehäuse sitzt dann wenigstens ein Separatorteller auf einer drehangetriebenen Welle. Vorzugsweise sitzen mehrere Separatorteller übereinander auf der Welle.

Beispielsweise sitzen in dem Gehäuse wenigstens zwei Separatorteller auf der drehangetriebenen Welle. Die wenigstens zwei Separatorteller sind vorzugsweise übereinander (d.h. in axialer Richtung gestapelt) angeordnet. Zwischen den wenigstens zwei Separatortellern kann im ersten Ringbereich ein Spalt ausgebildet werden. Die Dicke des von den zwei benachbarten Separatortellern gebildeten Pakets, also die Summe aus den Dicken der jeweiligen Separatorteller(einschließlich des dazwischen gebildeten Spalts) ist vorzugsweise kleiner gleich 1 mm, bevorzugt kleiner gleich 0,8 mm, besonders bevorzugt kleiner gleich 0,6 mm. Die Dicke wird nach unten nur durch die Festigkeit des Materials der Separatorteller und der Viskosität des abzutrennenden Öls begrenzt. Als sinnvolle Untergrenze für die Dicke des Pakets können zur Zeit 0,25mm angesehen werden.

Der im ersten Ringbereich gebildete Spalt zwischen den beiden Separatortellern hat vorzugsweise eine Höhe kleiner gleich 0,3 mmm besonders bevorzugt kleiner gleich 0,2 mm. Als untere Spaltgrenze wird für Ölnebelabscheider ein Spalt von etwa 0,05mm angenommen. Diese Untergrenze hängt aber von der Viskosität des zu separierenden Öls ab. Je dünnflüssiger das zu separierende Fluid, umso kleiner kann der Spalt ausfallen. Sofern in dem zu trennenden Gemisch auch Partikel, z.B. Ruß oder dgl. enthalten sind, sollte die Spaltdicke vorzugsweise nicht kleiner als der zu erwartende Partikeldurchmesser sein.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben.
Figur 1 zeigt eine Aufsicht auf einen Separatorteller.
Figur 2 zeigt ein Detail des Separatortellers.
Figur 3 zeigt ein weiteres Detail des Separatortellers.
Figur 4 zeigt ein Detail einer Querschnittsansicht zweier gestapelter Separatorteller nach den Figuren 1 bis 3.
Figur 5 zeigt in einer Bildfolge das Ergebnis einer Simulation zur Befüllung einer Spritzgussform für den Separatorteller.
Figur 6 zeigt ein Detail zweier weiteren Separatorteller, und
Figur 7 zeigt ein Detail zweier weiterer Separatorteller.

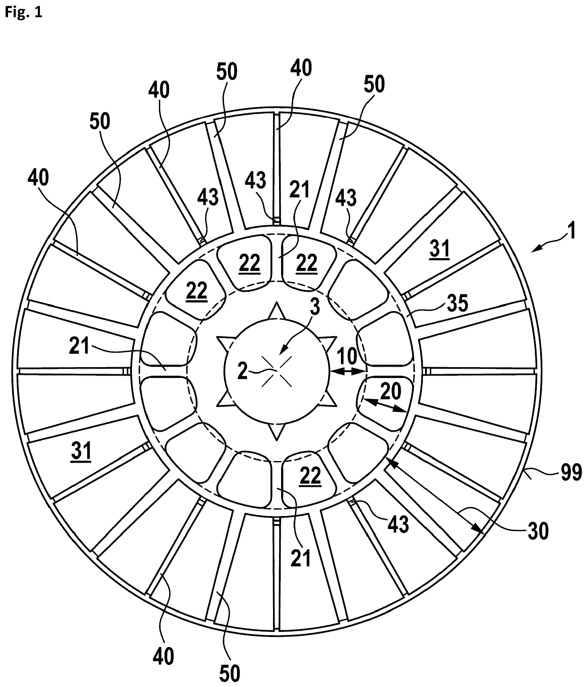

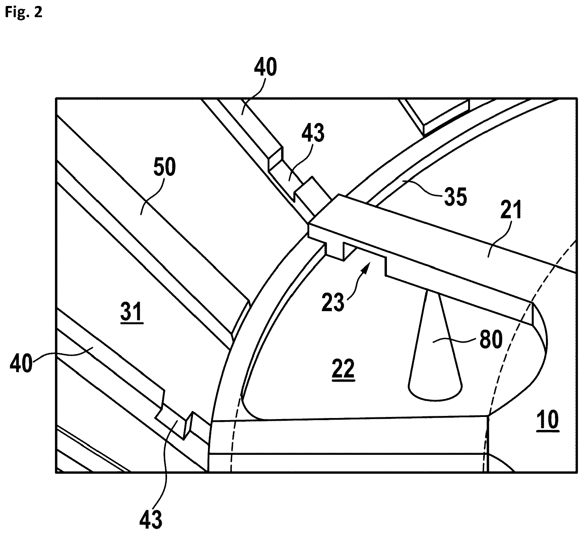

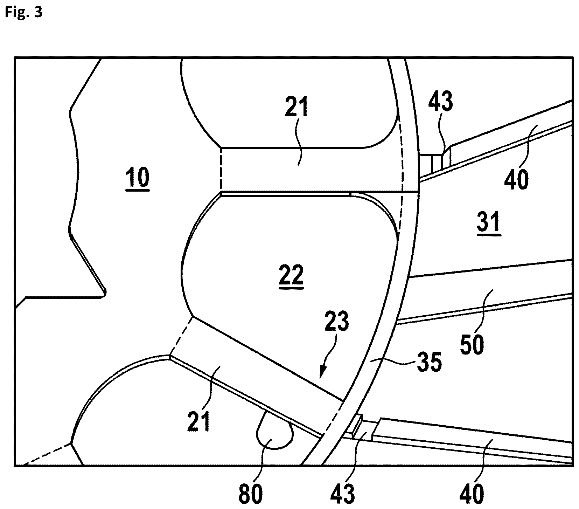

Figur 1 zeigt eine Aufsicht auf einen Separatorteller 1. Der Separatorteller 1 hat drei ringförmige Bereiche. Der ersten Ringbereich 10 wird radial nach innen von einer Aufnahme 3 für eine Welle begrenzt. Die gemeinsame Rotationsachse der Welle und des Separatortellers 1 verläuft orthogonal zur Zeichenebene und ist mit dem Bezugszeichen 2 gekennzeichnet. Der erste Ringbereich 10 geht dann radial nach Außen in einen zweiten Ringbereich 20 über, der im Wesentlichen aus vorzugsweise gleichmäßig angeordneten Speichen 21 und den dazwischen liegenden Öffnungen 22 gebildet wird. Die Speichen 21 enden an einem Ring 35 am innenliegenden Rand des Dritten Ringbereichs 30. Der dritte Ringbereich 30 erstreckt sich bis zum dem Rand 99 des Separatortellers 1, der diesen radial nach außen abschließt. Die Grenzen zwischen den Ringbereichen 10, 20, 30 sind als gestrichelte Linien eingezeichnet. Die jeweils benachbarten Ringbereiche 10 und 20 sowie 20 und 30 grenzen folglich, vorzugsweise übergangslos, aneinander an. Die radiale Ausdehnung der Ringebereiche ist durch Doppelpfeile dargestellt. Der dritte Ringbereich hat einen sich an den Ring 35 anschließenden konischen Abschnitt 31, mit der Rotationsachse 2 als Konusachse (vgl. Fig. 2 und Fig. 3).

Die Aufnahme 3 für die Welle ist ein mittiges Durchgangsloch. Die Kontur des Durchgangslochs 3 hat wie dargestellt vorzugsweise eine diskontinuierliche Rotationssymmetrie, so dass keine Unwucht entsteht aber ein Drehmoment übertragender Formschluss des Separatortellers 1 mit einer komplementären Welle ermöglicht wird. Andere Möglichkeiten zur Drehmomentübertragung wie z.B. ein Kraftschluss zwischen der Welle und/oder übereinander gestapelten Separatortellern 1 sind ebenfalls möglich.

Das dargestellte Beispiel hat auf seiner Oberseite eine Vielzahl von Stegen 40, die in der Aufsicht vorzugsweise in der radialen Verlängerung jeweils einer Speiche 21 angeordnet sind. Zwischen je zwei Stegen 40 ist optional oder alternativ wenigstens je ein Zwischensteg 50 angeordnet. Die Stege 40 und die Zwischenstege 50 sind Erhöhungen in der Oberseite des dritten Ringbereichs 30, der ansonsten vorzugsweise zumindest im Wesentlichen die Oberfläche eine Konussegments hat, z.B. die eines Kegelstumpfs hat. Die Stege 40 und die Zwischenstege 50 dienen im montierten Zustand als Abstandhalter, die auf der Unterseite eines oberhalb des dargestellten Separatortellers 1 auf der Welle gestapelten Separatortellers 1 anliegen.

Figur 2 zeigt ein Detail des Separatortellers 1 in einer perspektivischen Ansicht, konkret einen Ausschnitt des zweiten Ringbereichs 20 mit Ausschnitten des angrenzenden ersten und dritten Ringbereichs 10 bzw. 30. Auf der Unterseite einer Speiche 21 ist schematisch vereinfacht eine Einspritzdüse 80 einer Spritzgussform als Kegelstumpf skizziert (s. auch Fig.3). Die abgeflachte Spitze des Kegelstumpfs definiert folglich eine Angussstelle. Die abgeflachte Spitze setzt in diesem Beispiel an der Unterseite des Separatortellers 1, genauer an einer Speiche 21 (also im zweiten Bereich 20) an. Die Speiche 21 ist im Sinne der obigen Beschreibung daher eine angussnahe Speiche 21. Die abgeflachte Spitze könnte aber ebenso auf der Oberseite und/oder im ersten Bereich 10 ansetzen.

Die angussnahe Speiche 21 hat einen Bereich 23 mit einer verjüngten Querschnittsfläche. In der Fertigung wird dieser Bereich durch einen Vorsprung der Spritzgussform realisiert. Die Kunststoffschmelze kann daher von der Angussstelle nicht ausschließlich über die angussnahe Speiche 21 radial nach außen strömen, sondern muss über den ersten Bereich 10 (also den entsprechenden Hohlraum der Spritzgussform) über andere (d.h. auch über angussferne) Speichen 21 nach außen strömen. Dadurch wird die Fließfront beim Spritzgießen des dritten Ringbereichs 30 vergleichmäßigt, so dass dieser mit einer reduzierten Wandstärke gefertigt werden kann.

An die Speichen 21 ist radial nach außen der Ring 35 angesetzt. Der Ring 35 ist nach der obigen Einteilung ein Teil des dritten Ringbereichs 30. Der Ring 35 hat im Vergleich zu den flächigen Teilen des dritten Ringbereichs 30 eine größere Materialstärke, entsprechend der entsprechende Ringkanal der Spritzgussform einen größeren freien Querschnitt. Die Kunststoffschmelze kann sich daher in Umfangsrichtung gleichmäßig verteilen, bevor sie über in den Ringspalt zur Ausbildung des konischen, flächigen Abschnitts 31 des dritten Ringbereichs 30 eintritt.

Im Bereich der Stege 40 hat die Spritzgussform einen radialen Kanal, der einer gleichmäßigen Ausbreitung der Kunststoffschmelze entgegenwirkt, weil die Kunststoffschmelze sich in diesem Kanal schneller ausbreiten würde. Zudem schießt zumindest ein Teil der Kunststoffschmelze in die in der radialen Verlängerung der Speichen 21 sitzenden Stege 40 (genauer die die korrespondierende Ausnehmung) ein. Durch eine optionale Querschnittsverjüngung 43 der Stege 40 an ihrem einlassseitigen Endbereich kann einer ungleichmäßigen Ausbreitung der Kunststoffschmelze beim Spritzgießen entgegengewirkt werden. Als einlassseitiger Endbereich wird hier das mit Bezug auf die Rotationsachse 2 innenliegende erste Viertel, vorzugsweise erste Fünftel, besser noch erstes Achtel oder erstes Zehntel des entsprechenden Stegs 40 bezeichnet.

Die optionalen Zwischenstege 50 tragen ebenso zu einer Vergleichmäßigung der Ausbreitung der Kunststoffschmelze bei, da die Spritzgussform an der entsprechenden Stelle einen Kanal mit einem vergrößerten Querschnitt ausbildet. Dieser Kanal liegt genau in dem Bereich, der von den Stegen 40 am weitesten entfernt ist (vgl. Fig. 1 bis Fig. 3) und verhindert so eine dort ansonsten zu erwartende Bindenaht. In den Figuren 2 und 3 ist deutlich zu erkennen, dass die Zwischenstege 50 breiter als die Stege 40 dargestellt sind, um den Druckabfall in der Spritzgussform durch einen größeren Strömungsquerschnitt zu kompensieren. Die Höhe h (Dicke) der Stege 40 und vorzugsweise auch der Zwischenstege 50 ist vorzugsweise zumindest näherungsweise gleich (± 10%) und über die Entfernung von der Rotationsachse 2 zumindest näherungsweise gleich (± 10%) konstant (mit Ausnahme der querschnittsverjüngten Bereiche 43). Durch die Angabe "(± 10%)" soll klargestellt werden, dass "zumindest näherungsweise gleich" gleich sowie Abweichungen vom Mittelwert von bis zu 10% des Mittelwerts erfasst. Geringere Abweichungen von bis zu ±5%, bis zu ±2,5% oder bis zu 1% sind mit abnehmender Größe zunehmend bevorzugt.

Wie dargestellt, ist es vorteilhaft, wenn sich die Querschnittsfläche der Stege 40 und/oder die der Zwischenstege 50 in radialer Richtung verjüngt, um so den Druckabfall in radialer Richtung in den, die späteren Stege 40 bzw. Zwischenstege ausbildenden Kanälen, zu reduzieren, so dass eine über den Umfang möglichst gleichmäßige Fließfront erzeugt wird. Der Separatorteller neigt folglich weniger zu Bindenähten.

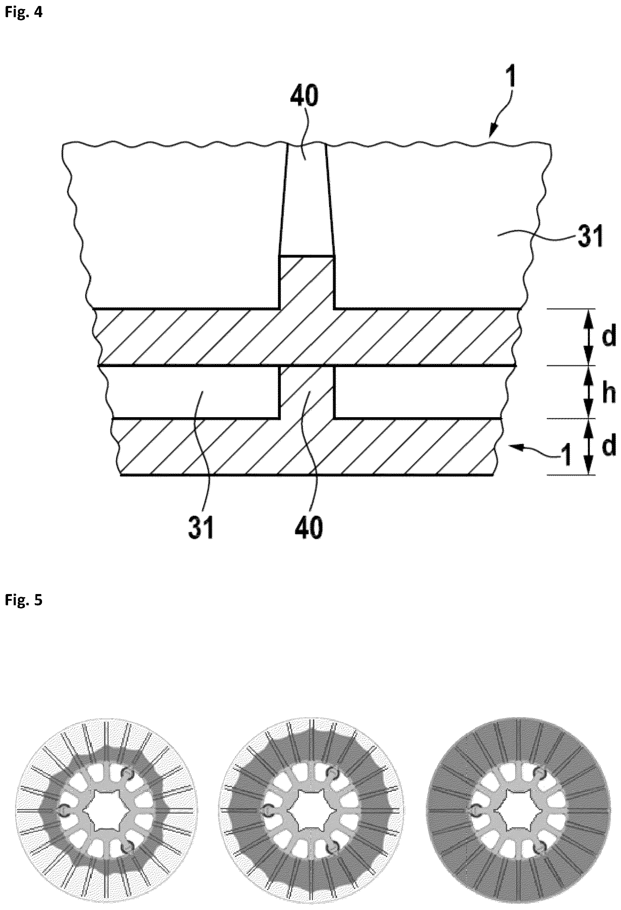

Figur 4 zeigt einen Querschnitt, der entlang einer Kreiszylinderfläche um die Rotationsachse im dritten Ringbereich gelegt wurde, wobei die Blickrichtung radial nach außen weist. Deutlich zu erkennen ist die Verdickung der sich radial nach außen verjüngenden Stege mit der Höhe h auf der konisch nach außen ansteigenden Oberfläche 31 mit einer Wandstärke d. Die Steghöhe h definiert in dieser Ausführungsform den Abstand zwischen zwei benachbarten Separatortellern.

Figur 5 zeigt eine Bildfolge einer Simulation der Ausbreitung einer Kunststoffschmelze bei der Herstellung des in den Figuren 1 bis 3 dargestellten Separatortellers. Wie gut zu erkennen ist, breitet sich die Fließfront der Kunststoffmasse in sehr kurzer Zeit beinahe rotationssymmetrisch aus. Die Neigung zur Ausbildung von Bindenähten ist daher sehr gering. Entsprechend kann die Wandstärke d in den Bereichen 31 besonders gering ausfallen.

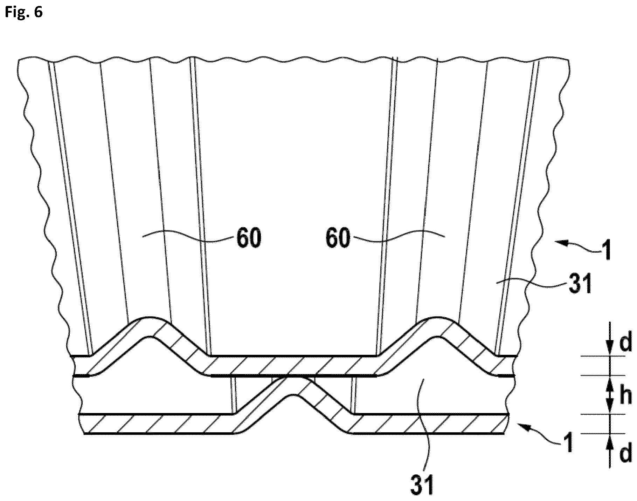

Die Fig. 6 zeigt eine Alternative für die Ausbildung von Abstandshaltern auf Separatortellern 1; die Ansicht entspricht der in Fig. 4. Anstelle von Stegen 40 dienen hier jedoch Wellen 60 im dritten Ringbereich 30 als Abstandhalter, wobei dies erfordert, dass benachbarte Separatorteller 1 wie angedeutet gegeneinander verdreht auf der Welle gestapelt sind. Die Wellen 60 bilden Sicken 60 mit einer Höhe haben gegenüber den Stegen 40 den Vorteil, dass die entsprechende Spritzgussform keine Bereiche hat in denen die Spaltdicke sich (nennenswert) vergrößert. Die oben Anhand der Stege 40 beschriebenen Querschnittsverjüngungen 43 können eingangsseitig der Sicken 60 daher geringer ausgeprägt sein bzw. oder sogar ganz entfallen. Wie zu sehen ist bleibt die Wandstärke d der Separatorteller 1 über den gesamten Umfang im Wesentlichen (± 10%) konstant, d.h. die Wandstärke der Sicke 60 ist dieselbe wie im Bereich zwischen den Sicken 60. Die Sicken 60 sind im Übrigen wie die oben beschriebenen Stege 40 und/oder Zwischenstege 50 angeordnet, d.h. sie erstrecken sich vorzugsweise zumindest in etwa radial, wobei Abweichungen von ±30° von der jeweiligen Radialen zulässig sind.

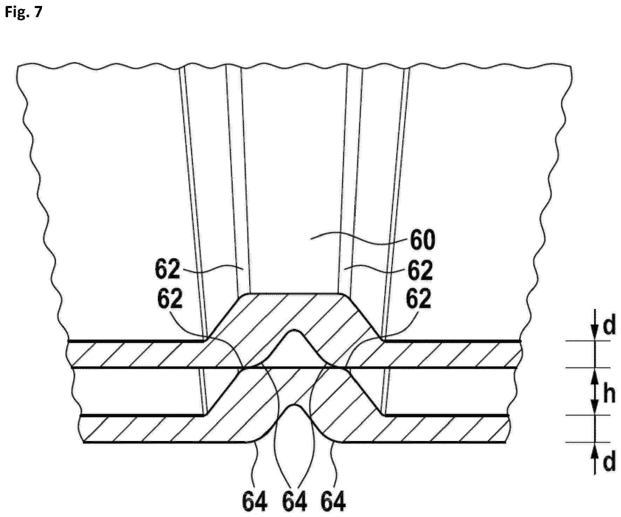

Fig. 7 zeigt eine weitere Alternative mit geringfügig geänderten Sicken 60, die ein Einsinken aufeinandergestapelter Sicken 60 ineinander verhindert. Das wird dadurch erreicht, dass der Abstand der Oberkanten 62 einer Sicke 60 größer ist als der Abstand entsprechender Unterkanten 64, wobei die Kanten 62, 64 in der Skizze gerundet dargestellt sind. Anders als in der Figur 6 dargestellt ist die Kontur der Oberseite einer Sicke 60 nicht kongruent zur Kontur der entsprechenden Unterseite der Sicke 60. Wenn gleiche Separatorscheiben 1 gestapelt werden stellt sich folglich ein durch die Höhe Sicke definierter Abstand h zwischen benachbarten Separatortellern 1 ein. Es kommt folglich bei dieser Ausführungsform nur darauf an, dass die von der Sicke 60 an ihrer einen Seite geschaffene Auflagefläche breiter ist als die auf der anderen Seite der Sicke 60 gebildete Vertiefung.

### Bezugszeichenliste

- 1: Separatorteller
- 2: Rotationsachse
- 3: Aufnahme für Welle
- 10: erster Ringbereich
- 20: zweiter Ringbereich
- 21: Speiche
- 22: Öffnungen
- 23: Bereich einer Speiche mit verjüngter Querschnittsfläche
- 30: dritter Ringbereich
- 31: Oberfläche, konischer Abschnitt
- 35: Ring
- 40: Stege
- 43: Querschnittsverjüngung
- 50: Zwischenstege
- 60: Sicke
- 62: obere Kanten der Sicke
- 64: untere Kanten der Sicke
- 80: Einspritzdüse
- 99: Rand des Separatortellers

## Patentansprüche

1. Separatorteller (1) mit einer Aufnahme (3) für eine Antriebswelle, die eine Rotationsachse (2) definiert, und mit
- einem sich radial an die Aufnahme (3) anschließenden ersten Ringbereich (10),
- einem sich radial and den ersten Ringbereich anschließenden zweite Ringbereich (20) und
- einem sich an den zweiten Ringbereich (20) radial anschließenden dritten Ringbereich (30),
wobei der zweite Ringbereich (20) mehrere Speichen (21) aufweist, die den ersten und den dritten Ringbereich (10, 30) miteinander verbinden und dass zwischen den Speichen (21) sich in axialer Richtung erstreckende Strömungskanäle (22) sind,
**dadurch gekennzeichnet, dass** die Speichen (21), die einer Angussstelle benachbart sind oder diese aufweisen, zumindest einen Abschnitt (43) mit einer verjüngten Querschnittsfläche aufweisen, wobei die Querschnittsfläche in einer Kreiszylinderfläche um die Rotationsachse (2) liegt und wobei der eine Abschnitt (43) mit der verjüngten Querschnittsfläche weiter von der Rotationsachse (2) entfernt ist als die jeweils nächstliegende Angussstelle.

2. Separatorteller (1) nach Anspruch 1,
**dadurch gekennzeichnet, dass**
der Separatorteller (1) wenigstens zwei Angussstellen aufweist, die rotationssymmetrisch zur Rotationsachse (2) angeordnet sind.

3. Separatorteller nach einem der vorhergehenden Ansprüche,
**dadurch gekennzeichnet, dass**
der Werkstoff für den Separatorteller ein teilaraomatisiertes Polyamid ist.

4. Separatorteller nach einem der Ansprüche 1 bis 3,
**dadurch gekennzeichnet, dass**
sich an wenigstens eine Speiche (21) in radialer Richtung ein Steg (40) anschließt, der als Verdickung der Wandstärke eines konischen Abschnitts (31) des dritten Ringbereichs (30) ausgebildet ist.

5. Separatorteller nach Anspruch 4,
**dadurch gekennzeichnet, dass**
sich an wenigstens zwei benachbarte Speichen (21) je ein Steg (40) in radialer Richtung anschließt, wobei zwischen den beiden Stegen (40) wenigstens ein Zwischensteg (50) angeordnet ist.

6. Separatorteller nach Anspruch 4 oder 5,
**dadurch gekennzeichnet, dass**
sich die Querschnittsfläche des wenigstens einen Stegs (40) und/oder des wenigstens einen Zwischenstegs (50) in radialer Richtung verjüngt.

7. Separatorteller nach Anspruch 5 oder 6,
**dadurch gekennzeichnet, dass**
die Querschnittsfläche des Zwischenstegs (50) als Funktion des Radius bei einem gegeben Radius größer ist als die jeweiligen Querschnittsflächen der beiden den Zwischensteg (50) einschließenden Stege (40) bei gleichem Radius.

8. Separatorteller nach einem der Ansprüche 4 bis 7,
**dadurch gekennzeichnet, dass**
wenigstens ein nicht unmittelbar mit einer Angussstelle benachbarter Steg (40) einen Abschnitt (43) hat in dem die Querschnittsfläche sich in radialer Richtung zunächst verkleinert und dann wieder vergrößert.

9. Separatorteller nach einem der Ansprüche 4 bis 8,
**dadurch gekennzeichnet, dass**
die Wandstärke des dritten Ringabschnitts (30) zwischen zwei benachbarten Stegen (40) und/oder zwischen einem Steg (40) und einem benachbarten Zwischensteg (50) in Umfangsrichtung und/oder in radialer Richtung bis auf 10% konstant ist.

10. Separatorteller nach einem der Ansprüche 1 bis 9,
**dadurch gekennzeichnet, dass**
sich an wenigstens eine Speiche (21) in radialer Richtung, insbesondere mit gleichbleibender Wandstärke eines konischen Abschnitts (31) des dritten Ringbereichs (30), eine Sicke (60) anschließt.

11. Separatorteller nach einem der Ansprüche 4 bis 10,
**dadurch gekennzeichnet, dass**
der Steg (40) oder die Sicke (60) eine Höhe h über der Wandung kleiner gleich 0,3 mm, insbesondere kleiner gleich 0,2 mm aufweist.

12. Ölnebelabscheider, mit einem Gehäuse das wenigstens einen Gaseinlass, wenigstens einen Gasauslass und wenigstens einen Ölauslass hat,
**dadurch gekennzeichnet, dass**
in dem Gehäuse wenigstens ein Separatorteller nach einen der Ansprüche 1 bis 11 auf einer drehangetriebenen Welle sitzt.

13. Ölnebelabscheider nach Anspruch 12,
**dadurch gekennzeichnet, dass**
in dem Gehäuse wenigstens zwei Separatorteller auf der drehangetriebenen Welle übereinander angeordnet sind und die beiden übereinander liegenden Separatorteller und ein dazwischen liegenden Spalt im ersten Ringbereich (10) eine gemeinsame Dicke kleiner gleich 1 mm, bevorzugt kleiner gleich 0,8 mm, besonders bevorzugt kleiner gleich 0,6 mm aufweisen.

14. Ölnebelabscheider nach Anspruch 13,
**dadurch gekennzeichnet, dass**
der im ersten Ringbereich (10) gebildete Spalt zwischen den beiden Separatortellern eine Höhe kleiner gleich 0,3 mm insbesondere kleiner gleich 0,2 mm aufweist.

## Claims

1. Separator plate (1) with a receptacle (3) for a drive shaft, which defines an axis of rotation (2), and with
- a first ring area (10) adjoining radially to the receptacle (3),
- a second ring area (20) adjoining radially to the first ring area and
- a third ring area (30) adjoining radially to the second ring area (20),
wherein the second ring area (20) has multiple spokes (21) which connect the first and the third ring areas (10, 30) to one another and that flow channels (22) extending in axial direction are between the spokes (21),
**characterized in that** those spokes (21) which are adjacent to or which comprise a sprue location, have at least one section (43) with a tapered cross-sectional area, wherein the cross-sectional area is a circular-cylindrical area around the axis of rotation (2) and wherein the section (43) with the tapered cross-sectional area is more distant from the axis of rotation (2) than the respective closest sprue location.

2. Separator plate (1) according to claim 1,
**characterized in that**
the separator plate (1) has at least two sprue locations which are arranged rotationally symmetrical to the axis of rotation (2).

3. Separator plate according to one of the preceding claims,
**characterized in that**
the material for the separator plate is a partially aromatic polyamide.

4. Separator plate according to one of claims 1 to 3,
**characterized in that**
a web (40) adjoins to at least one spoke (21) in radial direction, which web is formed as a thickening of the wall thickness of a conical section (31) of the third ring area (30).

5. Separator plate according to claim 4,
**characterized in that**
a web (40) adjoins to each of at least two adjacent spokes (21) in radial direction, wherein at least one intermediate web (50) is arranged between the two webs (40).

6. Separator plate according to claim 4 or 5,
**characterized in that**
the cross-sectional area of the at least one web (40) and/or of the at least one intermediate web (50) tapers in radial direction.

7. Separator plate according to claim 5 or 6,
**characterized in that**
the cross-sectional area of the intermediate web (50) as a function of the radius for a given radius is greater than the respective cross-sectional areas of the two webs (40) enclosing the intermediate web (50) with the same radius.

8. Separator plate according to one of claims 4 to 7,
**characterized in that**
at least one web (40) which is not directly adjacent to a sprue location has a section (43) in which the cross-sectional area is initially reduced in the radial direction and then enlarged again.

9. Separator plate according to one of claims 4 to 8,
**characterized in that**
the wall thickness of the third ring section (30) between two adjacent webs (40) and/or between one web (40) and an adjacent intermediate web (50) in the circumferential direction and/or in radial direction is constant up to 10%.

10. Separator plate according to one of claims 1 to 9,
**characterized in that**
a bead (60) adjoins to at least one spoke (21) in radial direction, in particular with a constant wall thickness of a conical section (31) of the third ring area (30).

11. Separator plate according to one of claims 4 to 10,
**characterized in that**
the web (40) or the bead (60) has a height h above the wall of less than or equal to 0.3 mm, in particular less than or equal to 0.2 mm.

12. Oil mist separator with a housing that has at least one gas inlet, at least one gas outlet and at least one oil outlet,
**characterized in that**
at least one separator plate according to one of claims 1 to 11 is seated on a rotationally driven shaft inside the housing.

13. Oil mist separator according to claim 12,
**characterized in that**
at least two separator plates are arranged one above the other on the rotationally driven shaft in the housing and the two separator plates being arranged one above the other and a gap in-between in the first ring area (10) have a total thickness of less than or equal to 1 mm, preferably less than or equal to 0.8 mm, particularly preferably less than or equal to 0.6 mm.

14. Oil mist separator according to claim 13,
**characterized in that**
the gap formed in the first ring area (10) between the two separator plates has a height of less than or equal to 0.3 mm, in particular less than or equal to 0.2 mm.

## Revendications

1. Disque séparateur (1) comportant un logement (3) pour un arbre d'entraînement qui définit un axe de rotation (2), et
- une première zone annulaire (10) faisant suite radialement au logement (3),
- une deuxième zone annulaire (20) faisant suite radialement à la première zone annulaire et
- une troisième zone annulaire (30) faisant suite radialement à la deuxième zone annulaire (20),
la deuxième zone annulaire (20) présentant plusieurs branches (21) qui relient entre elles la première et la troisième zone annulaire (10, 30), et des canaux d'écoulement (22) qui s'étendent dans la direction axiale étant présents entre les branches (21),
**caractérisé en ce que** les branches (21) qui sont voisines d'un point d'injection ou qui présentent celui-ci, présentent au moins une partie (43) ayant une surface de section transversale rétrécie, la surface de section transversale se trouvant dans une surface cylindrique circulaire autour de l'axe de rotation (2) et la partie (43) ayant la surface de section transversale rétrécie étant plus éloignée de l'axe de rotation (2) que le point d'injection respectivement le plus proche.

2. Disque séparateur (1) selon la revendication 1,
**caractérisé en ce**
**que** le disque séparateur (1) présente au moins deux points d'injection qui sont disposés de manière symétrique en rotation par rapport à l'axe de rotation (2).

3. Disque séparateur selon l'une des revendications précédentes,
**caractérisé en ce**
**que** le matériau du disque séparateur est un polyamide partiellement aromatisé.

4. Disque séparateur selon l'une des revendications 1 à 3,
**caractérisé en ce**
**qu'**à au moins une branche (21) fait suite, dans la direction radiale, une entretoise (40) qui est réalisée sous la forme d'un épaississement de l'épaisseur de paroi d'une partie conique (31) de la troisième zone annulaire (30).

5. Disque séparateur selon la revendication 4,
**caractérisé en ce**
**qu'**à au moins deux branches (21) voisines fait chaque fois suite, dans la direction radiale, une entretoise (40), au moins une entretoise intermédiaire (50) étant disposée entre les deux entretoises (40).

6. Disque séparateur selon la revendication 4 ou 5,
**caractérisé en ce**
**que** la surface de section transversale de ladite au moins une entretoise (40) et/ou de ladite au moins une entretoise intermédiaire (50) se rétrécit dans la direction radiale.

7. Disque séparateur selon la revendication 5 ou 6,
**caractérisé en ce**
**que** la surface de section transversale de l'entretoise intermédiaire (50) en fonction du rayon est, pour un rayon donné, supérieure aux surfaces de section transversale respectives des deux entretoises (40) encadrant l'entretoise intermédiaire (50) pour un même rayon.

8. Disque séparateur selon l'une des revendications 4 à 7,
**caractérisé en ce**
**qu'**au moins une entretoise (40) non directement voisine d'un point d'injection présente une partie (43) dans laquelle la surface de section transversale diminue d'abord dans la direction radiale puis augmente à nouveau.

9. Disque séparateur selon l'une des revendications 4 à 8,
**caractérisé en ce**
**que** l'épaisseur de paroi de la troisième partie annulaire (30) entre deux entretoises (40) voisines et/ou entre une entretoise (40) et une entretoise intermédiaire (50) voisine est constante, à 10 % près, dans la direction circonférentielle et/ou dans la direction radiale.

10. Disque séparateur selon l'une des revendications 1 à 9,
**caractérisé en ce**
**qu'**une nervure (60) fait suite à au moins une branche (21) dans la direction radiale, en particulier avec une épaisseur de paroi constante d'une partie conique (31) de la troisième zone annulaire (30).

11. Disque séparateur selon l'une des revendications 4 à 10,
**caractérisé en ce**
**que** l'entretoise (40) ou la nervure (60) présente une hauteur h au-dessus de la paroi inférieure ou égale à 0,3 mm, en particulier inférieure ou égale à 0,2 mm.

12. Séparateur de brouillard d'huile comportant un boîtier ayant au moins une entrée de gaz, au moins une sortie de gaz et au moins une sortie d'huile,
**caractérisé en ce**
**qu'**au moins un disque séparateur selon l'une des revendications 1 à 11 est monté sur un arbre entraîné en rotation dans le boîtier.

13. Séparateur de brouillard d'huile selon la revendication 12,
**caractérisé en ce**
**que**, dans le boîtier, au moins deux disques séparateurs sont disposés l'un au-dessus de l'autre sur l'arbre entraîné en rotation et les deux disques séparateurs disposés l'un au-dessus de l'autre et une fente située entre les deux présentent, dans la première zone annulaire (10), une épaisseur commune inférieure ou égale à 1 mm, de préférence inférieure ou égale à 0,8 mm, de manière particulièrement préférée inférieure ou égale à 0,6 mm.

14. Séparateur de brouillard d'huile selon la revendication 13,
**caractérisé en ce**
**que** la fente formée dans la première zone annulaire (10) entre les deux disques séparateurs présente une hauteur inférieure ou égale à 0,3 mm, en particulier inférieure ou égale à 0,2 mm.
